# EUROPEAN PATENT APPLICATION

(11) **EP 2 282 054 A2**
(43) Date of publication of application: **09.02.2011**
(21) Application number: 10167669.0
(22) Date of filing: 29.06.2010
(51) Int. Cl.: F03D 9/00

(54) **A wind power plant predictive protection circuit**

(30) Priority: 30.06.2009 DK 200900812
(71) Applicant: Vestas Wind Systems A/S, 8940 Randers - SV (DK)
(72) Inventor: Nielsen, Peter, 7000 Fredericia (DK); Sørensen, Kim Sveinsson, 8680 Ry (DK)
(74) Representative: Inspicos A/S

(57) **Abstract**

The present invention relates to a method of operating of a wind power plant comprising a circuit breaker and at least one wind turbine generator electrically connectable to an electrical grid through said circuit breaker, the method comprising the steps of detecting at least one condition for the circuit breaker to trip by means of a sensor; informing a control means of this detection prior to the circuit breaker disconnecting; and preparing the at least one wind turbine generator before said circuit breaker disconnects said at least one wind turbine generator from said electrical grid.

## Description

### FIELD OF THE INVENTION

The present invention relates to a wind power plant, and the operation thereof, said wind power plant comprising a circuit breaker and at least one wind turbine generator. It is particularly related to, but in no way limited to, a wind power plant circuit.

### BACKGROUND OF THE INVENTION

In the electrical power generation industry power producing turbines are used to generate electrical power for transmission to a user supply network, known as a grid. Each form of turbine has its own issues during manufacturing and operation. For example, wind turbines are normally erected in clusters, known as wind power plant or wind farms, in locations, which have undergone a rigorous selection process. This selection process normally places wind turbine farms at a significant distance from the end users of the electricity that they will generate.

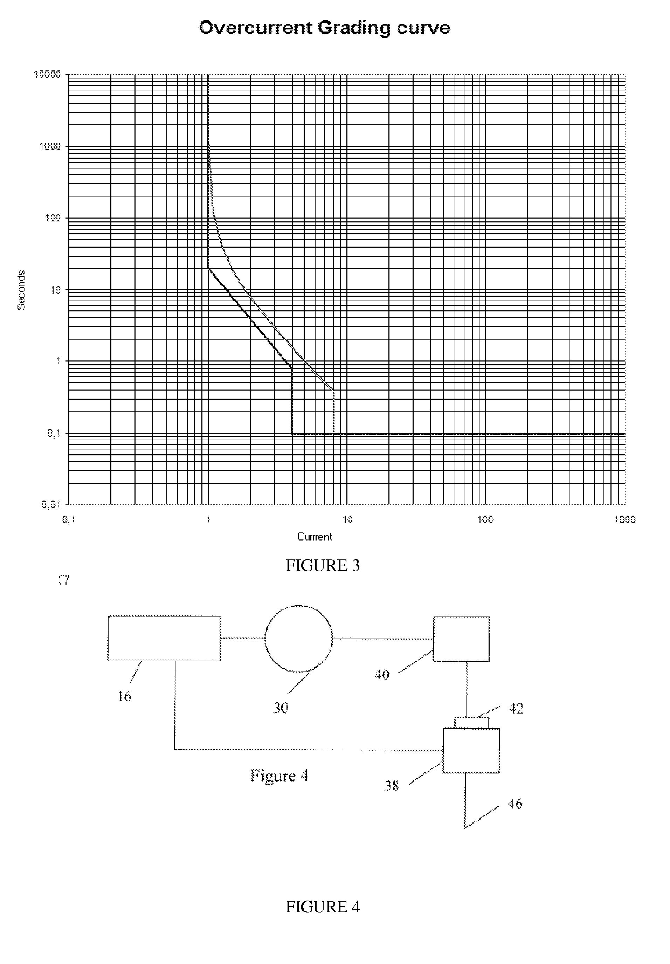

The individual turbines are normally grouped into a number of turbines, collectively known as a feeder, the outputs from which are brought together and fed to the grid via a sub-station. The substation includes a sub-station transformer arranged to adjust the output of the farm (voltage) to match the requirements of the grid. In order to protect the sub-station and the grid beyond from problems arising from individual turbines or feeders, such as transient short circuit current due to short circuits, each feeder is coupled to the sub-station through an individual circuit breaker, i.e. feeder circuit breaker. The circuit breaker is tripped in response to a transient in the feeder current (I) the output of which is constantly monitored by a current sensor. The acceptable behaviour of the feeder is illustrated as an example in the grading curve (I, t) of Figure 3, which indicates that the circuit breaker is only triggered if the current exceeds a pre-determined value for more than a predetermined acceptable period of time. In other words if the current/time characteristic of the feeder is above the curve in Figure 3 then the circuit breaker will be tripped.

Although the prompt action of the circuit breaker protects the sub-station and the grid it can cause serious damage, in some circumstances, to one or more of the wind turbine generators (WTG) due to the removal of the load from the feeder circuit. This damage can be both electrical and mechanical. Each wind turbine generator is behind their circuit breaker and damage protected by its own protection system, but unexpected opening of the circuit breaker may put some high loads to the mechanical structure of each wind turbine generator. The present invention can reduce the high loads by pre-warn the wind turbine about an up coming event. The damage can also happen to the sub station transformer or other electrical equipment, connected to the electrical circuit within the wind power plant, due to extreme high current transient.

The present invention addresses the issue of damage done to the wind turbine generator or the wind power plant due to the tripping of a circuit breaker and as stated above is pertinent to any type of generator used in electrical power generation. However, the invention will be described with reference to wind turbine generators, and to the damage that can be avoided to key components of the wind turbine generator or cluster of turbine and other electrical equipment within the wind power plant.

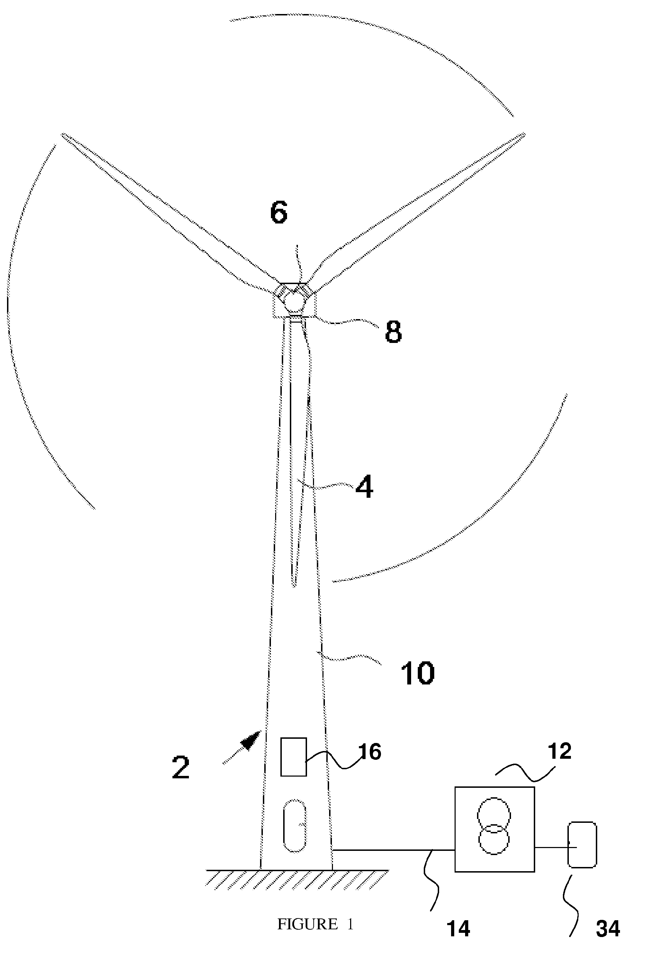

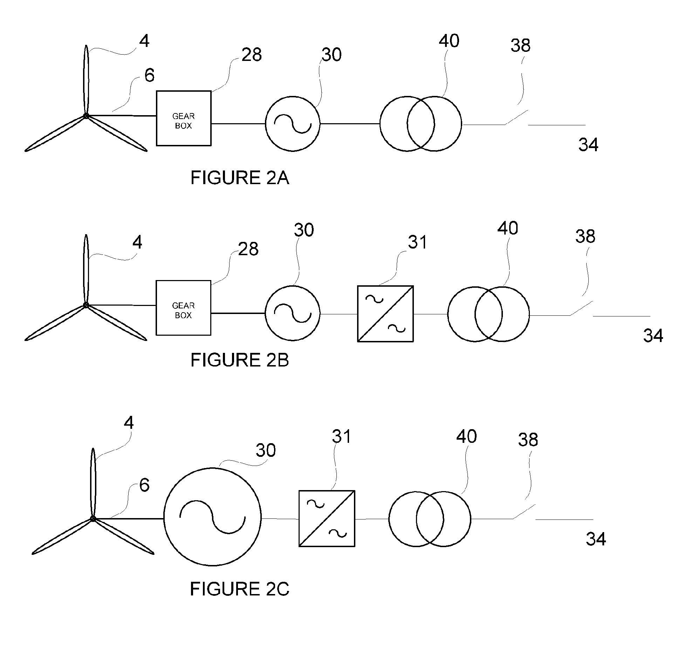

The components in wind turbine generator include those components specifically involved in the generation of electrical power, such as blade, hub, gearbox (optional), tower, generator and power converter (optional) and those components which are of a secondary nature, which are known as auxiliary components. All of the aforementioned components are described below with reference to Figures 1 and 2.

If the main circuit goes off line because of the tripping of a circuit breaker or feeder circuit breaker serious damage can be done to the turbine and the auxiliary circuit components. For example, mechanical loads, drive trains oscillations, uncontrolled behaviour, if the invention is not applied there is a need for at faster response to control the drivetrain, such as faster pitch speed.

Nonetheless, circuit breakers have been employed in power generation plants for many years because the possible damage to the turbines has been considered to be less important than the damage to the grid, that would otherwise be caused by a short circuit.

### DESCRIPTION OF THE INVENTION

This section is provided to introduce a selection of concepts in a simplified form that are further described below in the Detailed Description of the Invention. Thus, this section is not intended to identify key features or essential features of the claimed subject matter, nor is it intended to be used as an aid in determining the scope of the claimed subject matter.

According to a first aspect of the present invention there is provided a method of operating a wind power plant, said wind power plant comprising a circuit breaker and at least one wind turbine generator electrically connectable to an electrical grid through said circuit breaker, the method comprising the steps of:
- detecting at least one condition for the circuit breaker to trip by means of a sensor;;
- informing a control means of this detection prior to the circuit breaker disconnecting; and
- preparing the at least one wind turbine generator before said circuit breaker disconnects said at least one wind turbine generator from said electrical grid.

Preferably, the detection means is based on a current sensor and wherein said current sensor is sensing an electrical current through said circuit breaker, and wherein said condition is related to the current detected by the sensor.

Preferably, the generator control means is informed and action is taken within 100ms from the determination that the circuit breaker must be tripped, most preferably in between 50 and 100ms.

Preferably, the action which is taken to protect the generator is a fast ramp down of the P and Q set points of the turbine.

Alternatively, the action taken to protect the individual wind turbine generator includes one or more of the following reduction in the reactive power and/or active power, the latter is often done by pitching the aerodynamic rotor blades of the turbine.

In this embodiment the circuit breaker is tripped when current (I), as detected by the sensor, exceeds the current grading curve for the circuit.

Preferably the wind power plant further comprises additional electrical equipment installed between at least one wind turbine generator and the circuit breaker.

In an embodiment the detection of at least one condition for the circuit breaker to trip is made by the sensor by an indirect measurement.

In a preferred embodiment the external circuit is a user supply circuit or an electrical power grid.

According to a second aspect of the present invention there is provided a wind power plant comprising a circuit breaker and at least one wind turbine generator electrically connectable to an electrical grid through said circuit breaker, said wind power plant comprising:
- means for detecting at least one condition for the circuit breaker to trip; and
- control means being arranged to prepare the at least one wind turbine generator before said circuit breaker disconnects the at least one wind turbine generator from said electrical grid.

Preferably, the sensor means is arranged to inform the control means of the condition detection prior to the circuit breaker disconnecting the at least one wind turbine generator from the electrical grid.

In an embodiment the wind power plant comprises a plurality of wind turbine generators grouped into one or more individual feeders, each feeder having a feeder controller, a circuit breaker and a sensor and a least one wind turbine generator, the feeder controller taking action to protect each of the generators within the feeder prior to the circuit breaker actually disconnecting the feeder from the output to the external circuit.

Many of the attendant features will be more readily appreciated as the same become better understood by reference to the following detailed description considered in connection with the accompanying drawings. The preferred features may be combined as appropriate, as would be apparent to a skilled person, and may be combined with any of the aspects of the invention.

### BRIEF DESCRIPTION OF THE DRAWINGS

The present invention will now be explained in further details with reference to the accompanying figures, wherein
Figure 1 is a schematic diagram of the exterior of a known wind turbine;
Figure 2 is a block diagram of various wind turbine configurations;
Figure 3 is a graph of the grading curve of a power generator circuit in accordance with an aspect of the present invention;
Figure 4 is a circuit diagram of a power generator circuit in accordance with the present invention;
Figure 5 is a circuit diagram of a plurality of generators, as described in Figure 4, grouped into a feeder arrangement in accordance with the present invention; and
Figure 6 is a flow diagram of a method of operation of the feeder of Figure 5 or individual generators therein, as detailed in Figure 4, in accordance with an aspect of the present invention.

Common reference numerals are used throughout the figures to indicate similar features.

While the invention is susceptible to various modifications and alternative forms, specific embodiments have been shown by way of example in the figures and will be described in detail herein. It should be understood, however, that the invention is not intended to be limited to the particular forms disclosed. Rather, the invention is to cover all modifications, equivalents, and alternatives falling within the spirit and scope of the invention as defined by the appended claims.

### DETAILED DESCRIPTION OF THE INVENTION

Embodiments of the present invention are described below by way of example only. These examples represent the best ways of putting the invention into practice that are currently known to the Applicant although they are not the only ways in which this could be achieved.

The invention will be described herein with reference to wind turbine generators, although it can be implemented utilising any power generator system.

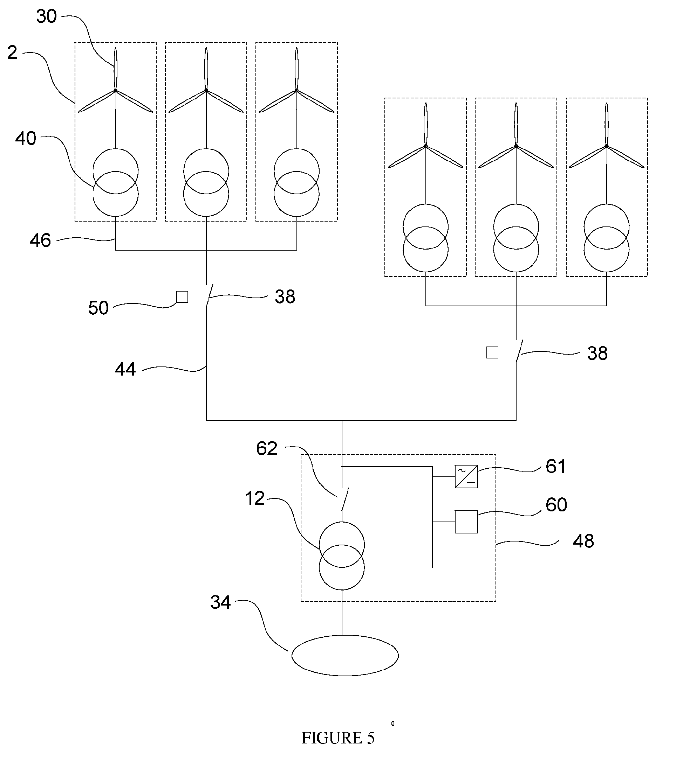

Regarding the figures, Figure 1 illustrates a schematic representation of the exterior of a known wind turbine generator 2. Figure 1 illustrates the turbine rotor 4, which is coupled to the main shaft 6 of the turbine 2. The nacelle 8 is in turn supported by the turbine tower 10. The nacelle 8 and the tower 10 houses the bulk of the components of the turbine, including a wind turbine or generator controller 16, which is a computer processor arranged to control the operation of the wind turbine 2. The controller 16 controls all equipment in the wind turbine 2 based on input from sensors or estimators. The controller 16 also controls the angle of the blades of the wind rotor. The turbine 2 is shown with a transformer 12, which is positioned at ground level and may be remote from the tower 10. Often the transformer is located in the nacelle or in the tower. The transformer 12 can also be seen as a sub station transformer. In addition, as illustrated in Figure 5, the sub-station transformer 12 may be coupled to a plurality of turbines 2, which may be grouped into feeders 44 as will be discussed in more detail below.

Outside the wind turbine generator the current is transmitted to the sub-station transformer 12, along cables 14, from which the grid 34 is fed. An optional wind turbine transformer 40 will transform the output voltage of the generator 30, being in the range of 400-6000 V, to a higher level at approximately 6 to 36 kV. The sub-station transformer 12 will transform the voltage to an even higher level at approximately 100 to 400kV
Figure 2 illustrates different topologies of single wind turbine generators in accordance with the present invention. Figure 2a-2c all have an electrical generator 30. The electrical generator can be an AC induction generator, synchronous generator with excitation winding or a permanent magnet synchronous generator. The listed generator types are examples and the invention should not be limited to these types of generators.
Figure 2a illustrates a wind turbine generator with a rotor 4, main shaft 6 connected to a gear 28, with a low speed side and a high speed side, the high speed side is connected to an electrical generator 30. The electrical output of the generator is transformed to a higher voltage level in a turbine transformer 40 and the output is fed to an electrical grid 34 through a circuit breaker 38.
Figure 2b illustrates another wind turbine with a rotor 4, main shaft 6 connected to a gear 28, with a low speed side and a high speed side, the high speed side is connected to an electrical generator 30. The electrical output of the generator 30 is fed to a frequency converter 31 allowing the output frequency of the generator 30 to vary in relation to the nearly fixed frequency at the grid 34. The output the frequency converter 31 is transformed to a higher voltage level in a turbine transformer 40 and the output is fed to an electrical grid 34 through a circuit breaker 38.
Figure 2c illustrates another wind turbine with a rotor 4 connected to a low speed electrical generator 30. The electrical output of the generator is fed to a frequency converter 31 allowing the output frequency of the generator 30 to vary in relation to the nearly fixed frequency at the electrical grid 34. The output the frequency converter 31 is transformed to a higher voltage level in a turbine transformer 40 and the output is fed to an electrical grid 34 through a circuit breaker 38.

The wind turbine generator 2 is connected to an electrical grid 34 through a circuit breaker 38 allowing the wind turbine generator to be disconnected from the grid. Disconnection from the grid can be needed for service purpose, but it can also be the result of an over current in the circuit breaker 38. The over current can happen due to short circuits either in the wind turbine or somewhere in the electrical grid 34. The result of a short circuit on either side of the circuit breaker can cause damage on the electrical as well as on the mechanical component of the wind turbine 2.

The present invention is intended for protecting the electrical and mechanical equipment from the damage that may happen when the circuit breaker 38 disconnects a wind turbine generator or even a wind power plant. The disconnection of a circuit breaker 38 will create sudden changes to the system within the wind power plant, that again will generate electrical transients and cause high mechanical loads a the wind turbine 2. Situations that may result in component failure on any components in the wind power plant, especially power converters 31 and transformers 12, 40 are sensitive to high transients.

A circuit breaker 38 is an automatically operated electrical switch designed to protect an electrical circuit from damage caused by overload or short circuit. Its basic function is to detect a fault condition and, by tripping, interrupting continuity, to discontinue electrical flow. Unlike a fuse, which operates once and then has to be replaced, a circuit breaker 38 can be reset (either manually or automatically) to resume normal operation. Circuit breakers 38 are made in varying sizes, from small devices that protect an individual household appliance up to large switchgear designed to protect high voltage circuits feeding an entire city.

Some circuit breakers 38 use a solenoid (electromagnet) which pulling force increases with the current. The circuit breaker contacts are held closed by a latch. As the current in the solenoid increases beyond the rating of the circuit breaker, the solenoid's pull releases the latch which then allows the contacts to open by spring action. The core is restrained by a spring until the current exceeds the breaker rating.

Thermal magnetic circuit breakers 38 incorporate both techniques with the electromagnet responding instantaneously to large surges in current (short circuits) and the bimetallic strip responding to less extreme but longer-term over-current conditions.

Medium-voltage circuit breakers are often operated by current sensing protective relays operated through current transducers such as current transformers 42. Medium-voltage circuit breakers nearly always use separate current transducers and protection relays, instead of relying on built-in thermal or magnetic over current transducers.

Figure 3 illustrates the grading curve for the normal operation of a power generator circuit including a generator 30 and a circuit breaker 38. The protection relays ensures that the circuit breaker 38 is tripped when the current (I) in the circuit exceeds the permitted current for more than a predetermined time (grading curve), as will be discussed below.

Figure 4 illustrates an embodiment of a power generator circuit in accordance with the present invention including a single generator 30 in the form of a wind turbine generator 2. As well as the generator 30 the circuit includes a transformer 40 and a controller 16 which are locate within a nacelle 8 in this embodiment. In addition, the circuit includes a circuit breaker 38 and a current sensor 42. Current in the circuit is monitored by the sensor 42 and the circuit breaker 38 is tripped if the current exceeds a predetermined grading characteristic, as discussed above. For protection, the grading curve is coordinated with the controller 16, so when the current through circuit breaker 38 exceeds the grading curve (I,t) and the circuit breaker 38 is bound to trip. Typically, a delay of 50-100ms is introduced before the wind turbine is actually disconnected. This delay can be used to prepare the turbine for the disconnection, by initiating a fast ramp down of P and Q set-points to the turbines 2 in the feeder affected. This control action will decrease the stress mechanically and electrically at the instant of the trip or even assure a completely controlled stop of all affected turbines.

Figure 5 illustrates an embodiment of the present invention wherein a plurality of individual generators 30 (or turbines 2) is grouped into individual feeders 44, each equipped with a circuit breaker 38 for protection of the generators 30 (or turbines 2) in that feeder.

Each of the individual generators 30 is coupled through a transformer 40 to an output 46 for that feeder 44. Each output 46 is coupled to a sub-station 48. The sub-station 48 includes a sub-station circuit breaker 38 and a transformer 12 which produces an output which is suitable for the external circuit, normally a electrical circuit or grid 34. The circuit also includes feeder circuit breakers 38 and feeder controllers 50 each of which is arranged to control the operation of each of the generators 30 within one of the feeders 44. In another embodiment the feeder can also have a feeder transformer 12 (not shown).

The sub-station may also have various electrical equipment 61 for providing control of voltage level and reactive power, such equipment can be switched capacitors, statcom etc. all equipment that would be known to person skilled in the art of wind power plants. Often the substation also have a plant or park controller 60 that can communicate with all equipment in the wind power plant, this plant controller 60 can be used for preparing the wind turbines 2 in the event of the tripping of the sub-station circuit breaker 38.

If the wind power plant is made with feeders 44, the feeder controllers 50 may communicate with the plant controller 60, which again communicates with the wind turbines 2 through the wind turbine controllers 16. The feeder controllers 50 may also communicate directly with the wind turbine controllers 16.

The sensor 42 is coupled to the feeder controller 50 via a fibre optic cable 52 to enhance the speed of communication there between. The aforementioned control can include controlling operation of the mechanisms utilised in the generation of power and the auxiliary components as detailed above. It can also include control of individual controllers 16 within each turbine 2.

In case of an internal fault in a feeder 44 (short circuit) the current through circuit breaker 38 exceeds the grading curve (I,t) and the circuit breaker 38 is bound to trip. Typically, a delay of 50-100ms is introduced before the feeder is actually disconnected. By sharing the circuit breaker current measurement 42 value over a fibre connection (TCP/IP or any other communication protocols) with the plant controller 60, the controller is able to predict the circuit breaker trip before it actually occurs, due to the delay. In these 50-100 ms, the plant controller 60 initiates a fast ramp down of P and Q set-points to the turbines in the feeder affected. This control action will decrease the stress mechanically and electrically) at the instant of the trip or even assure a completely controlled stop of all affected turbines.

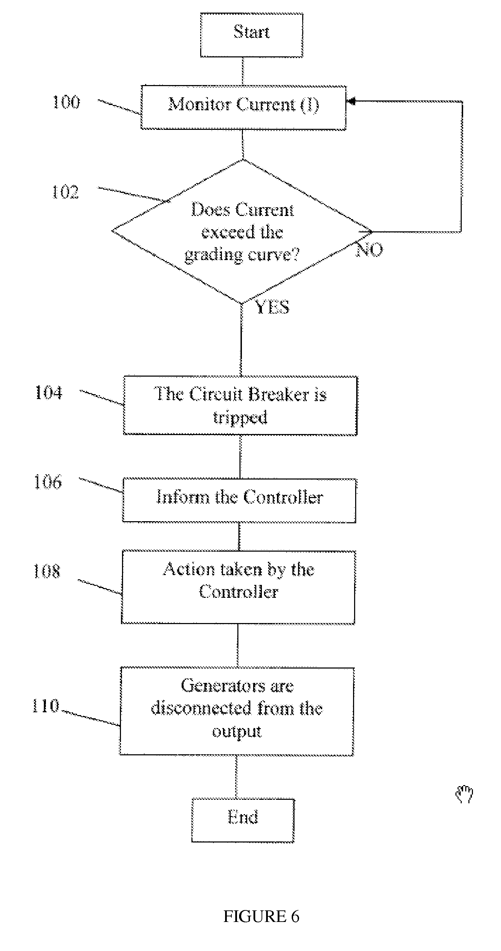

Figure 6 is a flow diagram illustrating a method of operation of each of the turbines 2, within the feeder 44, as described above with reference to Figure 4. In particular it illustrates a method of operation in accordance with the present invention in which the current in the circuit from the generators 30 to the output 46 within each feeder 44 is monitored by a current sensor 42 (Box 100).

If the current does not exceed the grading curve, as illustrated in Figure 3, then no action is taken (Box 102) and the sensor 42 continues to monitor the current (Box 100). However, if the current exceeds the grading curve, most likely due to a short circuit, then the circuit breaker 38 is tripped (Box 104).

However, when the conditions necessary for the circuit breaker 38 to trip arise the sensor 42 sends a signal before the actual disconnection, via a communications channel, to the feeder controller 50 within the feeder 44 (Box 106). On receipt of this signal the feeder controller 50 takes action to ameliorate the effects of the tripping of the circuit breaker 38 (Box 108) prior to the circuit breaker 38 actually disconnecting the generator 30 from the output 46 to the external circuit 34 (110).

In particular the controller 16, 50 or 60 instructs a fast ramp down of the active power, P and reactive power, Q set points for each generator 30. In addition the fast ramp down of P would for a wind turbine generator without a power converter 31 require a change in the pitch angle of the blades of the rotor 4. Additionally a wind turbine generator with a power converter can ramp down the P set point within the power converter 31, and allow the wind rotor 4 to accelerate in speed, within an allowed range. Doing so, the turbine will be ready to support the grid 34 when the circuit breaker reconnects.

It is a feature of the present invention that action is taken by the plant controller 60, feeder controller 50, or the generator controller 16, to ameliorate the detrimental effects of the tripping of the circuit breaker 38. In order for this to be possible the inventors firstly had to determine that there is a delay between circumstances that would cause the circuit breaker 38 to trip having arisen and the actual disconnection of the generators 30 from the output 46 of the feeder 44. Furthermore, they also had to come to the conclusion that positive action could be taken to offset the aforementioned effects, which goes against the long trend in the industry as such delays have for many years been considered to be an unavoidable result of utilising a circuit breaker 38, the only redeeming feature of which is that it is preferable to the damage a short circuit would otherwise do to a substation 48 or grid 34.

Whilst the above description relates to wind power plants, this is by way of example only. The invention is applicable to any turbine system, such as oil fired or hydro-electric turbines or any other turbine used in electricity generation.

In summary the invention relates to, a method of operating a wind power plant comprising a circuit breaker and at least one wind turbine generator electrically connectable to an electrical grid through said circuit breaker, the method comprising the steps of detecting at least one condition for the circuit breaker to trip by means of a sensor; informing a control means of this detection prior to the circuit breaker disconnecting; and preparing the at least one wind turbine generator before said circuit breaker disconnects said at least one wind turbine generator from said electrical grid.

Any range or device value given herein may be extended or altered without losing the effect sought, as will be apparent to the skilled person.

It will be understood that the benefits and advantages described above may relate to one embodiment or may relate to several embodiments. It will further be understood that reference to 'an' item refer to one or more of those items.

It will be understood that the above description of a preferred embodiment is given by way of example only and that various modifications may be made by those skilled in the art. The above specification, examples and data provide a complete description of the structure and use of exemplary embodiments of the invention. Although various embodiments of the invention have been described above with a certain degree of particularity, or with reference to one or more individual embodiments, those skilled in the art could make numerous alterations to the disclosed embodiments without departing from the spirit or scope of this invention.

## Claims

1. A method of operating a wind power plant, said wind power plant comprising a circuit breaker and at least one wind turbine generator electrically connectable to an electrical grid through said circuit breaker, the method comprising the steps of:
- detecting at least one condition for the circuit breaker to trip by means of a sensor;
- informing a control means of this detection prior to the circuit breaker disconnecting; and
- preparing the at least one wind turbine generator before said circuit breaker disconnects said at least one wind turbine generator from said electrical grid.

2. The method according to claim 1, wherein said sensor comprises a current transducer adapted to sense an electrical current through said circuit breaker, and wherein said condition is related to the current detected by the current transducer.

3. The method according to claim 1 or 2, wherein the control means is informed and action is taken within 100 ms, such as within 75 ms, such as within 50 ms, from the determination that the circuit breaker will trip.

4. The method according to any of the preceding claims, wherein the step of preparing the at least one wind turbine generator comprises initiating a fast ramp down of the P and Q set points for the at least one wind turbine generator.

5. The method according to any of the preceding claims, wherein the step of preparing the at least one wind turbine generator comprises sending a pre-warning to any equipment within the wind power plant.

6. The method according to any of the preceding claims, wherein the circuit breaker is adapted to trip when the sensor detects that the current (I) exceeds the current grading curve for the circuit breaker.

7. The method according to any of the preceding claims, wherein the wind power plant further comprises additional electrical equipment installed between the at least one wind turbine generator and the circuit breaker.

8. The method according to any of the preceding claims, wherein the detection of at least one condition for the circuit breaker to trip is made by the sensor by an indirect measurement.

9. A wind power plant comprising a circuit breaker and at least one wind turbine generator electrically connectable to an electrical grid through said circuit breaker, said wind power plant further comprising sensor means for detecting at least one condition for the circuit breaker to trip, wherein the said sensor means is arranged for informing a control means of this detection prior to the circuit breaker disconnecting the at least one wind turbine generator from said electrical grid, and wherein said control means is arranged to prepare the at least one wind turbine generator before said circuit breaker disconnects the at least one wind turbine generator from said electrical grid.

10. A wind power plant according to claim 9, wherein said sensor means comprises a current transducer adapted to sense an electrical current through said circuit breaker, and wherein said condition is related to said current detected by said current transducer.

11. A wind power plant according to claim 9 or 10, wherein the control means is adapted to be informed and adapted to take action within 100 ms, such as within 75 ms, such as within 50 ms, from the determination that the circuit breaker will trip.

12. A wind power plant according to any of claims 9-11, wherein said control means is arranged to prepare the at least one wind turbine generator by initiating a fast ramp down of the P and Q set points for each wind turbine generator.

13. A wind power plant according to any of claims 9-12, wherein said control means is arranged to prepare the at least one wind turbine generator by including pre-warning to any equipment within the wind power plant.

14. The wind power plant according to any of claims 9-13, wherein the circuit breaker is adapted to trip when the sensor detects that the current (I) exceeds the current grading curve for said circuit breaker.

15. The wind power plant according to any of claims 9-14, wherein the wind power plant further comprises additional electrical equipment installed between the at least one wind turbine generator and the circuit breaker.

16. The wind power plant according to any of claims 9-15, wherein the detection of at least one condition for the circuit breaker to trip is made by the sensor by an indirect measurement.

17. The wind power plant according to any of claims 9-16, wherein the wind power plant further comprises at least one feeder, said at least one feeder comprising
- a circuit breaker,
- a sensor,
- at least one wind turbine generator, and
- a feeder controller being arranged to take action to prepare each of the wind turbine generators within the feeder prior to the circuit breaker actually disconnecting at least one wind turbine generator from said electrical grid.
